# EUROPEAN PATENT APPLICATION

(11) **EP 3 089 095 A1**
(43) Date of publication of application: **02.11.2016**
(21) Application number: 16166985.8
(22) Date of filing: 26.04.2016
(51) Int. Cl.: G06Q 30/02

(54) **OPTIMIZING COUPON BUNDLING FOR INCREASING CUSTOMER CONSUMPTION**

(30) Priority: 30.04.2015 IL 23857615
(71) Applicant: Deutsche Telekom AG, 53113 Bonn (DE)
(72) Inventor: PROHL, Matthias, 50674 Köln (DE); HAMED, Ketabdar, 10555 Berlin (DE); ASAF, Shabtai, 7684200 Hulda (IL); GILAD, Katz, 7624843 Rehovot (IL)
(74) Representative: Hoeger, Stellrecht & Partner Patentanwälte mbB

(57) **Abstract**

A method for presenting coupons in an order and a context which maximize the probability of the coupon being consumed is presented. In a first embodiment the method is to generate in advance every possible combination of coupons and order of the coupons within a set of individual coupons, to bundle every possible combination of coupons and order of the coupons within the set as a single entity and to present each entity as a single coupon. In a second embodiment the method represents the neighbors of each coupon as a context. In this embodiment of the invention, the method does not generate every possible coupon combination but instead creates groups of coupons within a given context.

## Description

### Field of the Invention

The invention is in the field of mobile communication. Specifically the invention is related to coupon recommendation systems for mobile devices.

### Background of the Invention

A coupon is a document provided by a retailer, manufacturer, or service provider to potential customers that can be exchanged for a discount when purchasing a product or service. The purposes of the coupon are to attract price conscious consumers to buy specific products and/or to attract new customers. Originally coupons were printed in newspapers, magazines, or on the packaging of goods and the customer would cut them out and take them to the retail store/s specified on the coupon to be redeemed. In recent years with the development of the internet, and more recently mobile communication services, coupons are more and more being distributed in electronic form.

Smart mobile devices, being small computers that are always connected to the internet and carried by consumers, are increasingly being used for context-based recommendation. Existing applications for mobile devices push messages and coupons to the device owner mainly based on his location. The mobile devices comprise sensors that provide mobile service providers with a great deal more information than just the location of the device holder. This additional information includes, degree of activity, data usage, incoming and outgoing call and messaging logs, location of friends etc. In addition information about a specific customer's social connections, e.g. "friends" from social networks, is readily available.

These applications enable a service provider to offer different business the option to promote their products by offering coupons/discounts/offers to their potential customers. In order to be attractive to the business the applications must be designed to maximize the coupons/discounts/offers consumption while minimizing the cost to the businesses.

One aspect that affects consumption of the coupons is the manner by which the coupons are presented to the user, i.e. the grouping. For example, presenting the user with coupons for three nearly identical Italian restaurants may reduce the user's willingness to use the system because of the perceived lack of selection. On the other hand, certain "sets" of coupons may encourage consumption: for example, a set of Italian, Japanese and Indian restaurants may provide a wide selection that the user may find appealing.

Another aspect that can affect the chances of consumption of coupons is the order in which the coupons are presented to the user. For example, presenting the user with two "high discount" coupons and then a "low discount" coupon may reduce the chances of it being consumed (compared with its chance of being consumed had it been presented alone).

It is a purpose of the present invention to present a method designed to produce both sets of coupons, which are likely to increase the probability of consumption and the optimal inner ordering of each set as well as the ordering of several sets of coupons.

Further purposes and advantages of this invention will appear as the description proceeds.

### Summary of the Invention

The invention is a method for presenting coupons on a mobile device, in an order and a context, which maximize the probability of the coupon being consumed. The method comprises the following steps:
a. collecting information from the mobile device about the history, the preferences, and the context of the user;
b. calculating the probability of consumption of the coupon;
c. calculating the utility of the coupon;
d. generating an ordered list of coupons based on the calculated probability of consumption and on the calculated utility;
and wherein for each coupon:
e. collecting information about the device and interface of the user;
f. generating possible groups of coupons using the information gathered in step a and in step e;
g. determining an optimal internal and intergroup order of the groups of coupons;
h. determining a utility of the groups of coupons;
i. selecting the optimal group; and
j. presenting the optimal group of coupons to the user.

In embodiments of the method of the invention step f comprises the steps of: generating in advance every possible combination of coupons in a set of individual coupons and order of the coupons within the set; bundling every possible combination of coupons and order of the coupons within the set as a single entity; and presenting each entity as a single coupon. In these embodiments steps g - i are carried out on the entities using the original settings of a recommendation model for a single coupon.

The method bundling of coupons into groups enables the extraction of additional contexts that relate to the context in which the coupons will be presented and the manner in which the groups of coupons will be perceived by the user. Examples of the additional contexts include:
a. the number of other coupons in a group;
b. the relative discount proposed by these coupons compared to the one offered by the analyzed coupon;
c. the overall differences in the price of the items proposed in the various coupons;
d. the way the coupons are ordered within the group;
e. the geographic distance between the businesses connected to each coupon; and
f. the similarity between the proposed products offered by the coupons.

In these embodiments step d of the method comprises the steps of:
a. Using the additional extracted contexts to define various contexts in which a coupon can appear; and
b. using a learning algorithm to determine the optimal context in which the coupon should be presented to maximize its chance of being consumed.

In embodiments of the method of the invention step f comprises generating groups of coupons that match the criterion of a given context. In these embodiments steps f - i comprise the steps:
a. assigning each of the coupons in a set of coupons to multiple contexts,
b. determining the utility of each of the coupons in each of its assigned contexts;
c. arranging all the different coupon-context combinations in a descending order list according to the utility determined in step b;
d. selecting from the descending order list the coupon-context combination that has the highest utility; and
e. selecting other coupons that match the criterion of the context selected in step d.

All the above and other characteristics and advantages of the invention will be further understood through the following illustrative and non-limitative description of embodiments thereof, with reference to the appended drawings.

### Brief Description of the Drawings

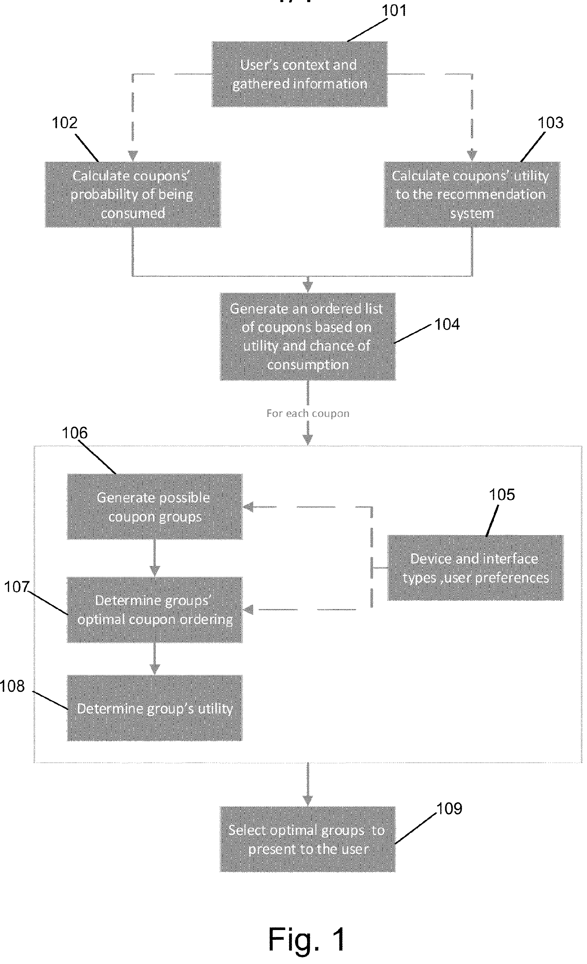

- Fig. 1 is a flow chart that schematically shows the method of the present invention.

### Detailed Description of Embodiments of the Invention

The present invention is a method for presenting coupons in an order and a context which maximize the probability of the coupon being consumed.
Each coupon has a consumption probability, which is the likelihood that a user consumes a coupon if it is presented to him. Moreover, if the coupon is consumed, the value "earned" by a recommendation system for the consumption of that coupon, is defined to be the utility of the coupon. Detailed descriptions of a recommendation system and a method of determining the utility of a coupon that can be used with the present invention can be found in copending Israeli patent application IL232180 entitled "Coupon Recommendation For Mobile Devices".

Fig. 1 is a schematic flowchart describing the method of the present invention. In the first step 101, information about the user is gathered and collected from the mobile device to determine the context of a user. The information gathered in this step includes knowledge of the user's history and preferences, as well as the context the user is currently in, for example the date, time and external weather conditions and temperature.

Then, in step 102 the consumption probability of a coupon is calculated, and in step 103, the utility (for the recommendation system of the invention) of a coupon is calculated. In step 104, the recommender system component of the invention, generates a list consisting of coupons ordered in a specific manner (e.g. in a certain order according to price, the type of the recommended product, the location in which it can be consumed etc.) based both on the utility calculated in step 103 and the consumption probability calculated in step 102.

For each coupon in the list, the following steps are performed: starting with step 105, recognizing the device and interface type of the user and collecting information about the user preferences. In this step the system takes into account the information from step 101, but also things connected to the device. For example if a user has a device with a very big screen the system might show more coupons, if a user is connected to WiFi, the system might show higher resolution images or a short video clip. Then, in step 106 the system of the invention generates possible groups of coupons. In step 107 the system of the invention determines the optimal inner order of the group of coupons, and in step 108 the system of the invention determines the utility of the group of coupons. In step, 109, the system of the invention selects the optimal groups of coupons to present to the user. Then, the optimal groups of coupons are presented to the user.

In a first embodiment of the invention, the method to select the group of coupons to present to the user and to determine the order of the coupons in the group is to generate in advance every possible combination of coupons and order of the coupons within a set of individual coupons, to bundle every possible combination of coupons and order of the coupons within the set as a single entity and to present each entity as a single coupon. For example, if the recommendation system has a set with only four possible coupons - *a*, *b*, *c* and *d* - each with its own characteristics (including different discount sizes), the following combinations would be generated: {a,b,c,d}, {a,b,d,c}, {a,c,b,d}... {a,b,c}, {a,c,b}, {a,b,d}, {a,c,d}, {a,d,b}...{a,b}, {a,c}, {a,d}, {b,a}...{a}, {b}, {c},{d}. That is, all possible combinations of coupons (in all sizes) and orderings of the coupons in the given set of coupons.

In this invention the inventors propose that each unique combination of coupons be "bundled" as a single coupon and added to the list of possible coupons that the recommendation module of the system can select to present to the user. In other words, each group of coupons (viewed by the recommendation algorithm as an ordinary coupon), will be subjected to the same selection process as regular single coupons and ranked using the same algorithm, without any required changes to the recommendation module (other than the changes needed to "bundle" several coupons into a single entity).

Representing each combination of coupons as a single coupon enables the system of the invention to effectively use the original setting of a recommendation model for a single coupon without any additional modifications. This embodiment of the method of the invention, while being very effective and easy to implement, is also time consuming and requires a large number of users to produce a fully-trained recommender system.

Bundling of coupons in groups enables the extraction of additional types of contextual information that relate to the manner in which the coupons will be presented and the manner in which the above mentioned groups of coupons will be perceived by the user. These additional types of contextual information include:
- The number of other coupons in a group
- The relative discount proposed by these coupons compared to the one offered by the analyzed coupon
- The overall differences in the price of the items proposed in the various coupons
- The way the coupons are ordered within the group (highest to lowest discount, lowest to highest price etc.)
- The geographic distance between the businesses connected to each coupon (the system may consider it more advantageous to offer a set with coupons that can be used in businesses that are in close proximity to one another. The opposite scenario may also apply).
- The similarity between the proposed products offered by the coupons.

These additional contexts can then be used by an existing recommendation framework on an additional learning algorithm (e.g. probabilistic frameworks such as Bayesian networks and Hidden Markov Models, decision trees, regression algorithms and collaborative filtering are some options that can be used) to determine the optimal context in which a coupon should be presented in order to maximize its chances of being consumed. In other words, these additional contexts can assist in both the creation of the groups as well as their internal orderings and presentation to the prospective customer.

One example of a use case for the process described above is as follows: once a coupon and a context have been chosen, the recommendation system takes up the task of selecting the coupons that will appear alongside it on the user's screen. These coupons will in fact serve as the "group context" of the selected coupon. This process will be done by first determining the most desirable contexts (those that are predicted to bring the highest utility) and sorting them in a descending order. The system will then search for combinations of coupons that fulfill the requirements defined by the chosen contexts. This process will be repeated iteratively until all the space allocated for the presentation of coupons has been used.

It should be noted that the process described above is affected by the device used by the user (step 105 in Fig. 1). For example, if the user uses a tablet, the number of coupons that can be simultaneously shown on the screen is much larger than the number that can be shown on an average smartphone.

A use case is now presented, for the purposes of illustrating the two embodiments of the method of the invention. In this example the system can only offer 4 coupons: A (1$ coupon), B (2$ coupon), C (2$ coupon) and D (3$ coupon). The recommendation system now needs to determine, which of these coupons (one or more) is to be presented to a user U.

Using the basic recommendation mode, the system determines the utility of each individual coupon. The result of that determination is:

**Table 1: The Utility of Each Individual Coupon**

| Coupon | Utility |
|---|---|
| A | 0.4 |
| B | 0.6 |
| C | 0.57 |
| D | 0.3 |

According to the first embodiment of the method of the invention, the system represents each possible context as a coupon. In this scenario, a new set of coupons is generated in addition to the existing one (that of individual coupons). This set will include the following coupons (assuming that the maximal group size is 3, but that is configurable): {A,B}, {A,C}, {A,D}, {B,A}, {C,A}.....{A,B,C}, {A,B,D}..... {D, C, B}.

These new coupons are also fed into the basic recommendation system and their utilities are also calculated. Then, all coupons are ranked:

**Table 2: THE UTILITY OF BOTH INDIVIDUAL COUPONS AND GROUPS OF COUPONS**

| Coupon | Utility |
|---|---|
| A,C,B | 0.8 |
| B,A,D | 0.75 |
| B | 0.6 |
| B,D | 0.59 |
| D,C | 0.59 |
| ... | |
| ... | |

Once this step is completed, the coupon (or group of coupons) with the highest utility are presented to the user. In the current example, and assuming that a maximal number of three coupons can be presented, the group of coupons that will be presented to the user is {A,C,B} (in this exact order).

According to a second embodiment of the method of the invention, the system represents the neighbors of each coupon as a context. In this embodiment of the invention, the method does not generate every possible coupon combination (as was done in Table 2), but instead creates groups of coupons within a given context. Examples of this scenario are presented in Table 3, where each of the coupons presented in Table 1 is assigned with multiple contexts (for convenience, only examples for coupons A and B are shown). Since specific coupons are not assigned to serve as contexts but instead the focus is on the attributes of the coupons (relative discount size, relative distance etc.), multiple coupon combinations can be considered using a much more compact representation.

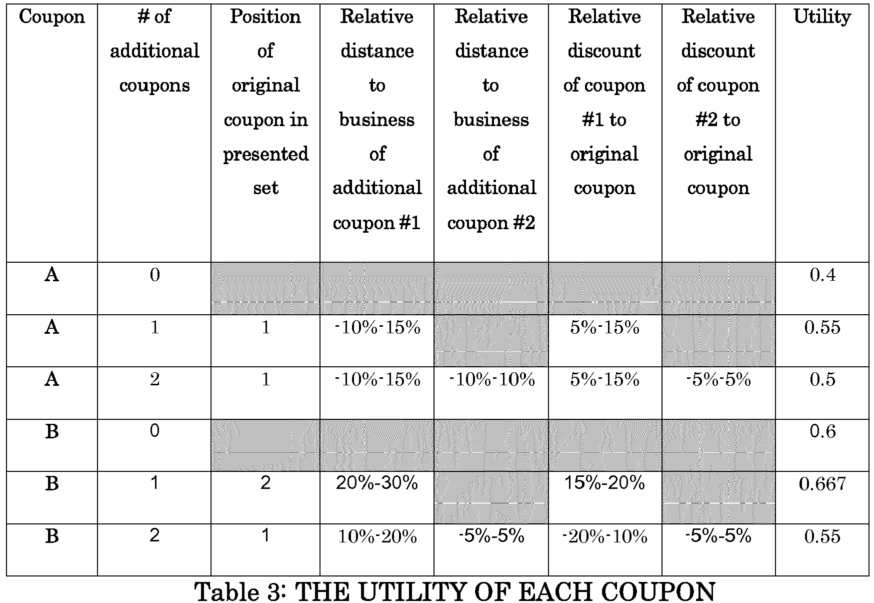

In table 3 the coupon currently being analyzed appears in the "coupon" column and columns 2 - 6 show the context of the coupons that comprise its group. Note that specific coupons are not referred to but the table refers to the characteristics of the coupons that will be added. This means that multiple coupons can be considered for each slot. The table above shows only a small section of a complete table, which would show the utility for each of the coupons in all possible contexts.

The process of choosing the coupons (either single ones or groups) is as follows:
1) All coupon context combinations (namely, all lines of Table 3) are sorted according to their utility in a descending order.
2) For the top item (the highest utility), it is determined whether coupons that match the required context are available. If that is the case, the coupons are recommended.
3) If available space remains on the user's screen (this can happen if the screen is sufficiently large, or because no relevant context coupons were found), return to step 1.

Although embodiments of the invention have been described by way of illustration, it will be understood that the invention may be carried out with many variations, modifications, and adaptations, without exceeding the scope of the claims.

## Claims

1. A method for presenting coupons on a mobile device, in an order and a context, which maximize the probability of the coupon being consumed; the method comprises the following steps:
a. collecting information from the mobile device about the history, the preferences, and the context of the user;
b. calculating the probability of consumption of the coupon;
c. calculating the utility of the coupon;
d. generating an ordered list of coupons based on the calculated probability of consumption and on the calculated utility;
and wherein for each coupon:
e. collecting information about the device and interface of the user;
f. generating possible groups of coupons using the information gathered in step a and in step e;
g. determining an optimal internal and intergroup order of the groups of coupons;
h. determining a utility of the groups of coupons;
i. selecting the optimal group; and
j. presenting the optimal group of coupons to the user.

2. The method of claim 1, wherein step f comprises the steps of: generating in advance every possible combination of coupons in a set of individual coupons and order of the coupons within the set; bundling every possible combination of coupons and order of the coupons within the set as a single entity; and presenting each entity as a single coupon.

3. The method of claim 2, wherein steps g - i are carried out on the entities using the original settings of a recommendation model for a single coupon.

4. The method of claim 2, wherein bundling of coupons into groups enables the extraction of additional contexts that relate to the context in which the coupons will be presented and the manner in which the groups of coupons will be perceived by the user.

5. The method of claim 4, wherein the additional contexts include:
a. the number of other coupons in a group;
b. the relative discount proposed by these coupons compared to the one offered by the analyzed coupon;
c. the overall differences in the price of the items proposed in the various coupons;
d. the way the coupons are ordered within the group;
e. the geographic distance between the businesses connected to each coupon; and
f. the similarity between the proposed products offered by the coupons.

6. The method of claim 1, wherein step d comprises the steps of:
a. Using the additional contexts of claim 4 to define various contexts in which a coupon can appear; and
b. using a learning algorithm to determine the optimal context in which the coupon should be presented to maximize its chance of being consumed.

7. The method of claim 1, wherein step f comprises generating groups of coupons that match the criterion of a given context.

8. The method of claim 7, wherein steps f - i comprise the steps:
a. assigning each of the coupons in a set of coupons to multiple contexts,
b. determining the utility of each of the coupons in each of its assigned contexts;
c. arranging all the different coupon-context combinations in a descending order list according to the utility determined in step b;
d. selecting from the descending order list the coupon-context combination that has the highest utility; and
e. selecting other coupons that match the criterion of the context selected in step d.
